(19) Europäisches Patentamt
European Patent Office
Office européen des brevets

(11) **EP 3 539 742 A1**

(12) **EUROPEAN PATENT APPLICATION**

(43) Date of publication:
**18.09.2019 Bulletin 2019/38**

(51) Int Cl.:
**B29C 41/04** (2006.01)   **C08L 67/02** (2006.01)

(21) Application number: **18162038.6**

(22) Date of filing: **15.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
• **Ramakrishnan, Vaidyanath**
**4612 PX Bergen op Zoom (NL)**

• **Armstrong, Mark**
**4612 PX Bergen op Zoom (NL)**
• **Goossens, Johannes Gerardus Petrus**
**4612 PX Bergen op Zoom (NL)**
• **Goossens, Johannes Martinus Dina**
**4612 PX Bergen op Zoom (NL)**

(74) Representative: **Modiano, Micaela Nadia et al**
**Modiano & Partners**
**Thierschstrasse 11**
**80538 München (DE)**

(54) **ROTATIONAL MOLDING OF DIE EXTRUDED COMPOSITES COMPRISING A FIBRILLATED FLOUROPOLYMER**

(57)    In an embodiment, a method for producing an article comprises rotomolding a die extruded composite comprising a matrix polymer and a fibrillated fluoropolymer in a rotomolding system to obtain the article; wherein the fibrillated fluoropolymer is encapsulated is present in the die extruded composite in an amount of 0.01 to 50 wt%, or 0.01 to 25 wt%, preferably 0.01 to 15 wt% based on the total weight of the die extruded composite; wherein an average fibril diameter of the fibrillated fluoropolymer is 5 to 500 nm, or 10 to 200 nm, or 20 to 100 nm; and wherein the article comprises an interior cavity.

FIG. 1

**Description**

BACKGROUND

Rotational molding, also known as rotomolding is a mature plastics processing technology carried out by the simultaneous melting of plastic powders or micropellets under bi-axial rotation, followed by cooling and ejection of the final part. Rotomolding is often employed in the manufacturing of hollow parts for numerous industries including automotive, packaging, construction, and leisure.

When rotational molding is used to produce fuel tanks, rotomolders must take extra steps to ensure that current fuel vapor emissions regulations are met. For example, rotational molders generally either a) fluorinate rotomolded polyolefin tanks until barrier properties are achieved, b) line the inside of the rotomolded polyolefin tanks with a suitable thermoplastic of suitable thickness, or c) employ a thermoplastic resin with natively high barrier properties as a single-shot solution (e.g. polyamide-6) for rotomolding. With the increasing ethanol content of fuel though, the single-shot solution can experience issues with material swelling.

To spur growth in the rotational molding industry, and to fully-utilize modern rotational molding equipment, material innovation and new offerings are required to advance the field of rotomolding.

BRIEF SUMMARY

Disclosed herein is a method of rotationally molding a die extruded composite comprising a fibrillated fluoropolymer.

In an embodiment, a method for producing an article comprises rotomolding a die extruded composite comprising a matrix polymer and a fibrillated fluoropolymer in a rotomolding system to obtain the article; wherein the fibrillated fluoropolymer is encapsulated is present in the die extruded composite in an amount of 0.01 to 50 wt%, or 0.01 to 25 wt%, preferably 0.01 to 15 wt% based on the total weight of the die extruded composite; wherein an average fibril diameter of the fibrillated fluoropolymer is 5 to 500 nm, or 10 to 200 nm, or 20 to 100 nm; and wherein the article comprises an interior cavity.

In an embodiment, a rotomolded article comprises the die extruded composite.

The above described and other features are exemplified by the following figures, detailed description, and claims.

BRIEF DESCRIPTION OF THE DRAWINGS

Refer now to the figures, which are non-limiting, exemplary embodiments, and wherein the like elements are numbered alike.

FIG. 1 is an illustration of an embodiment of a die;
FIG. 2 is an illustration of an embodiment of a cut-away of a die;
FIG. 3 is an illustration of an embodiment of a cut-away of a die;
FIG. 4 is an illustration of an embodiment of an orientation channel;
FIG. 5 is a graphical illustration of the viscosity measurements of Examples 1-5; and
FIG. 6 is a graphical illustration of the linear modulus of Examples 6-9.

DETAILED DESCRIPTION

There remains a need in the art to develop new rotomoldable composites, particularly for applications whose requirements stipulate at least one of: high chemical resistance, low permeation, continuous or transient exposure to high-temperature, and enhanced mechanical properties. As an example, to comply with increasingly strict evaporative emission standards, fuel tanks for small off-road engines should be constructed from materials providing an effective barrier to fuel vapor, while remaining chemically compatible to increasing ethanol content of fuel. Such properties are ill-afforded with the widely-used rotomoldable family of polyolefins. While other thermoplastic polymers, such as poly(butylene terephthalate), can offer improved chemical resistance to ethanol, they often suffer from poor mechanical properties such as one or more of low fatigue resistance, low impact properties, and a low tensile modulus. Although adding polytetrafluoroethylene to such composites has been shown to increase these properties, composites comprising polytetrafluoroethylene are generally not considered for use in rotomolding applications due to the fibrillated network increasing the low shear viscosity of the composite. For example, Rotational Molding Technology by R.J. Crawford and J.L. Thorne, William Andre Publishing, Norwich, NY, 2002 on Page 28, section 2.4 discloses that the melt viscosity of polypropylene is quite low and that while the melt flow index of polypropylene can range from 3 to 300, rotomolding grades have melt flow indexes of only 5 to 10 as determined in accordance with ASTM-D1638 at 230 degrees Celsius (°C).

It was surprisingly discovered that composites comprising a matrix polymer and a fibrillated fluoropolymer having a fiber diameter of 5 to 500 nanometers was capable of being rotomolded even though the composite had a viscosity of more than 1,000 Pascal sections (Pa·s) at a shear rate of 0.1 radians per second (rad/s) at 23°C. Without being bound by theory, it is believed that the fibrillated fluoropolymer forms a fibril network that somehow assists in the particle fusion during the rotomolding process.

The die extruded composite can comprise 0.01 to 50 weight percent (wt%), or 0.01 to 25 wt%, 0.01 to 15 wt% based on the total weight of the die extruded composite. The fibrillated fluoropolymer can have an average fiber diameter of 5 to 500 nanometers (nm), or 10 to 200 nm, or 20 to 100 nm. The average fiber diameter can be determined using image analysis of Scanning Electron Microscopy images of the fibers.

The fibrillated fluoropolymer comprises a fluoropolymer. The fluoropolymer can be a homopolymer or a copolymer that can comprise structural units derived from one or more fluorinated alpha-olefin monomers, that is, an alpha-olefin monomer that includes at least one fluorine atom in place of a hydrogen atom. The fluoropolymer can comprise structural units derived from two or more fluorinated alpha-olefin, for example, tetrafluoroethylene and hexafluoroethylene. The fluoropolymer can comprise structural units derived from one or more fluorinated alpha-olefin monomers and one or more non-fluorinated monoethylenically unsaturated monomers that are copolymerizable with the fluorinated monomers, for example, alpha-monoethylenically unsaturated copolymerizable monomers such as ethylene, propylene, butene, acrylate monomers (e.g., methyl methacrylate and butyl acrylate), and vinyl ether monomers (e.g., cyclohexyl vinyl ether, ethyl vinyl ether, n-butyl vinyl ether, and vinyl ester). Specific examples of fluoropolymers include a polytetrafluoroethylene, a polyhexafluoropropylene, a poly(vinylidene fluoride), a polychlorotrifluoroethylene, an ethylene tetrafluoroethylene copolymer, a fluorinated ethylene-propylene copolymer, a poly(vinyl fluoride), and an ethylene chlorotrifluoroethylene copolymer. Combinations comprising at least one of the foregoing fluoropolymers can also be used. The fluoropolymer can comprise at least one of: polytetrafluoroethylene, polyhexafluoropropylene, polyvinylidene fluoride, polychlorotrifluoroethylene, ethylene tetrafluoroethylene, fluorinated ethylene-propylene, polyvinyl fluoride, and ethylene chlorotrifluoroethylene. The fluoropolymer can comprise polytetrafluoroethylene (PTFE).

At least a portion of the fibrillated fluoropolymer can comprise an encapsulated fibrillated fluoropolymer that is encapsulated with an encapsulating polymer. The encapsulating polymer can comprise at least one of: an acrylic polymer, an acrylonitrile butadiene styrene (ABS) resin, an aromatic polyester, a ($C_{1-8}$ alkyl) (meth)acrylates, an ethylene propylene copolymer, an ethylene-vinyl acetate copolymer, a liquid crystalline polymer, a polyacetal, a polyacrylonitrile, a poly(alkenyl aromatic) polymer, a polyamide, a polybutadiene, a polycarbonate, a polyester, a polyetherimide, a polyether ketone, a polyether ether ketone, a polyethersulfone, a polyimide, a polyphenylene ether, a polyolefin, a polyphenylene ether, a polyphenylene sulfide, a polysiloxane, a polystyrene, a polysulfone, a polyurethane, a polyvinylidene halide, and a vinyl polymer (e.g. poly(vinyl alcohol), poly(vinyl acetate), and poly(vinyl fluoride)). The encapsulating polymer can comprise at least one of: a styrene-acrylonitrile copolymer, an acrylonitrile-butadiene-styrene copolymer, an alpha-alkyl-styrene-acrylonitrile copolymer, an alpha-methylstyrene-acrylonitrile copolymer, a styrenebutadiene rubber, and a methyl methacrylate copolymer. The encapsulating polymer can comprise a styrene-acrylonitrile copolymer.

If present, the encapsulating polymer can be present in an amount of 20 to 80 wt%, or 40 to 60 wt% based on the total weight of the encapsulating polymer and the fibrillated fluoropolymer.

The fibrillated fluoropolymer can be formed by extruding a die extruded composite comprising a fluoropolymer and a matrix polymer through a fibrillation die (also referred to herein as a die for short). The fluoropolymer can be a particulate fluoropolymer or pelletized fluoropolymer. The particulate fluoropolymer can be formed via emulsion polymerization or suspension polymerization. The particulate fluoropolymer can have an average particle size of 0.1 to 500 micrometers, or 0.1 to 1 micrometers, or 400 to 500 micrometers, or 50 to 300 micrometers. The pelletized fluoropolymer can be ground, for example, cryogenically ground, to a desired particle size prior to extruding.

The fibrillation die can have at least four regions: an entrance region, an orientation region (also referred to as an elongation region), a merging region, and an exit region, where each of these regions contributes to the elongation/orientation (e.g., fibrillation) of the fluoropolymer fed to the die.

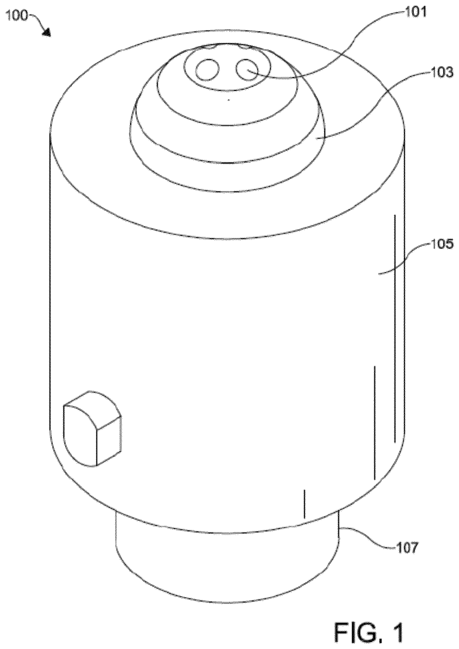

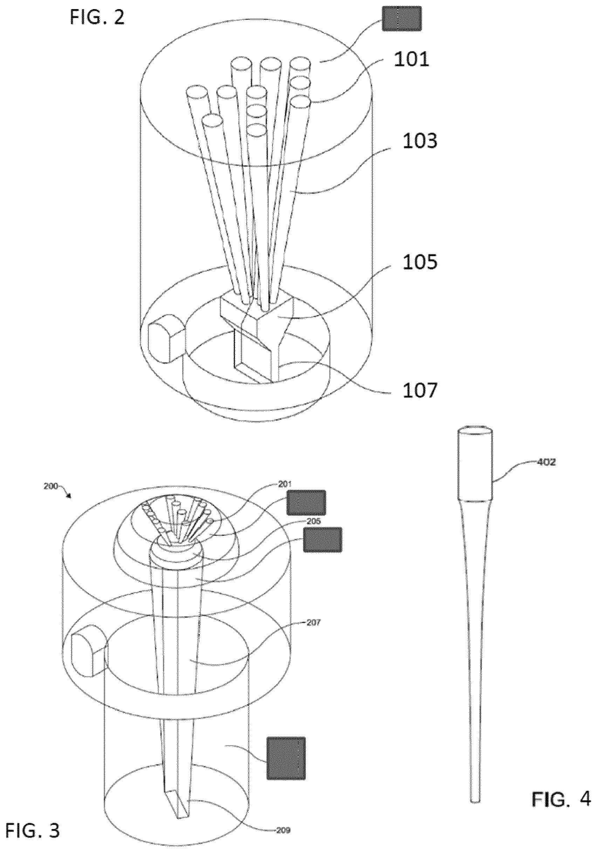

FIG. 1 is an illustration of an embodiment of fibrillation die 100 and FIG. 2 and FIG. 3 are illustrations of embodiments of a cut-away of fibrillation die 100. Fibrillation die 100 includes entrance region 101 that has a hemispherical profile, elongation region 103, merging region 105, and exit region 107. The elongation region includes orientation channels 203. The orientation channels 203 include inlets 201. The orientation channels 203 terminate at the merging region. The merging region can define a spherical receiving region. The exit region can include an entrance, tapered region 207, and exit 209. The entrance to the exit region can interface directly with the merging region. Exit 209 can be of a variety of cross-sections, e.g., rectangular.

The die can comprise an entrance region comprising at least one inlet, the inlet being in fluid communication with an orientation region of the die, the orientation region comprising a plurality of orientation channels having an inlet and an outlet, at least some of the plurality of orientation channels independently having an elongation ratio of 2 to 45, the elongation ratio being defined as the ratio of the cross-sectional area of the channel inlet to the cross-sectional area of the channel outlet; a merging region, the merging region defining a receiving volume in fluid communication with the outlets of the plurality of orientation channels of the orientation region, the merging region being configured to merge together at least some fluid flows originating from the outlets of the orientation channels of the orientation region; and an exit region in fluid communication with the merging region, the exit region having at least one outlet.

The entrance region can include one or more inlets to the die. An inlet can give rise to a contracted flow, which can be created by a contracting flow channel at the entrance, if present. The entrance region can have one, two, three, four, or more outlets. The entrance region can be planar, hemispherical, hemi-cylindrical, or otherwise shaped. The entrance region can be hemispherical.

In the orientation region, the fluid can be oriented in channels (orientation channels) having an elongation ratio of greater than 1, or 2 to 45, or 5 to 40, or 10 to 35, or 20 to 25, where the elongation ratio of a channel is the ratio of the cross-sectional area of the channel inlet to the cross-sectional area of the channel outlet. At least some of the plurality of orientation channels independently can have a length of 4 to 50 mm, or 10 to 40 mm.

The shapes of the inlet and outlet of a channel in the orientation region can each independently be circular, oblong, polygonal, or otherwise shaped. The angle of curvature of the entrance of a hyperbolic-configured channel can be 120 to 150 degrees, where the angle is the angle between a horizontal axis and a line tangent to the hyperbola at the entrance. The hyperbolic entrance can have a hyperbolic curvature over 1 to 95%, or 15 to 80%, or 40 to 50% of the length of the orientation channel.

Each orientation channel independently can have a circular, ovoid, oblong, polygonal, or irregular cross-sectional profile. Each orientation channel independently can have a varying cross-sectional area along the length of the channel, for example, the channel can be conical in configuration or frustoconical (truncated cone) in configuration. Each orientation channel independently can include a hyperbolic-shaped region and a linearly or otherwise tapered region. The diameter of the orientation channel can decrease by 1 to 95% over the length of the hyperbolic or parabolic-shaped region of the orientation channel. An example of orientation channel 402 having a hyperbolic-shaped region is illustrated in FIG. 4.

Each orientation channel independently can be configured to impose a Hencky strain over the length of the channel of 2 to 8 units. Without being bound by theory, it is believed that the foregoing strain levels can give rise to suitable orientation of the fluoropolymer being processed by the die. The flow profile in each orientation channel independently can impose a flow profile with a hyperbolic geometry, as they confer a comparatively strong flow profile within an orientation channel. Without being bound by theory, it is believed that the orientation channels can be configured (i.e., shaped) to impose a particular velocity profile (or wall stress, or both) on fluid that is communicated through the channel in the direction of the merging region. Without being bound to any particular theory, the velocity profile and/or stress act to orient the polymer chains of any polymeric matrix material fed through the orientation channels.

The die can include two or more orientation channels that are inclined at different angles from one another, as there is no requirement that orientation channels all converge at the same location. The orientation channels can be arranged in a skew arrangement or even be arranged in a skew-symmetric arrangement. Each orientation channel independently can be straight and axisymmetric. Each orientation channel independently can be curved, angled, or otherwise asymmetric about one, two, or three axes. Each orientation channel independently can comprise a straight section and a curved section.

In the merging region, at least some of the oriented flows from the orientation region are merged before being directed to the exit region. The merging region can be shaped so as to orient the fluoropolymer in a flow direction originating from orientation channels into the merging region along the flow direction and in a direction transverse to the flow direction. The merging region can be shaped so as to orient the fluoropolymer in a flow direction originating from orientation channels into the merging region along the flow direction. The merging region can be shaped so as to orient the fluoropolymer in a flow direction originating from orientation channels into the merging region along a direction within 45 degrees (or less) relative to the flow direction. The merging region can be shaped such that the merging region converges two or more flows originating from orientation channels.

The merging region and orientation channels can be arranged such that the merging region gives rise to multiple parallel flows. The merging region and orientation channels can be arranged such that the merging region gives rise to countercurrent flows that originates from the orientation channels. The merging region and orientation channels can be arranged such that the merging region gives rise to co-current flows that originate from the orientation channels. Without being bound by theory, the orientation region of the die can act to create a comparatively strong orientational flow, following by further drawing (i.e., orientation) of the molecular structures of molecules in the material fed to the die, before the oriented fluoropolymer exits the die.

The merging region can be configured such that the merging region receives the fluoropolymer from the orientation channels and gives rise to a flow pattern that orients the materials in two or more directions.

The merging region can be symmetric. The merging region can be oblong, skewed, or otherwise asymmetric about one, two, or three axes. The merging region can define an at least partially spherical receiving volume. The merging region can define a hemispherical receiving volume. The merging region can define an at least partially polygonal receiving volume.

In the exit region, the merged fibers exit the die, for example, under shear flow. The exit region can have a tapered rectangular section so as to form a tape or other cross-section of output. The exit region can include one or more orientation channels, and the exit region can action as an orientation region to apply further elongation/orientation force to the material being processed. The exit region can be symmetric. The exit region can be asymmetric about one, two, or three axes. The inlet and the outlet of the exit region can be each independently have a polygonal (for example, rectangular, triangular, pentagonal, etc.) a circular, an ovoid, or an irregular cross-sectional area. The exit region can have a tapered cross-section.

The disclosed die can be contrasted with existing dies in a variety of ways. For example, existing die designs that are fitted at the end of extruders do not have a feature creating strong extensional flow field and instead only have a shear flow field.

As used herein, the term "oriented" can refer to an element sharing an alignment (or nearly sharing an alignment) with another element. As one example, an element (e.g., a fibril) can have a major axis that is within, e.g., 20 degrees, or within 10 degrees, or with 5 degrees of parallel to the corresponding major axis of another fibril. As another example, a region can comprise a plurality of oriented fibrils, the fibrils all having major axes that are aligned to within 20 degrees, or within 10 degrees, or with 5 degrees of a particular line in space.

The die can comprise at least one of: a metal (for example, a metal alloy), a ceramic, a polymer.

The die extruded composite comprises a matrix polymer. The matrix polymer can comprise at least one of: a polyacetal, a poly($C_{1-6}$ alkyl)acrylate, a polyacrylamide, a polyacrylonitrile, a polyamide, a polyamideimide, a polyanhydride, a polyarylene ether, a polyarylene ether ketone, a polyarylene ketone, a polyarylene sulfide, a polyarylene sulfone, a polybenzothiazole, a polybenzoxazole, a polybenzimidazole, a polycarbonate, a polyester, a polyetherimide, a polyimide, a poly($C_{1-6}$ alkyl)methacrylate, a polymethacrylamide, a cyclic olefin polymer, a polyolefin, a polyoxadiazole, a polyoxymethylene, a polyphthalide, a polysilazane, a polystyrene, a polysulfide, a polysulfonamide, a polysulfonate, a polythioester, a polytriazine, a polyurea, a polyurethane, and a vinyl polymer. The matrix polymer can comprise at least one of: a polyester (for example, poly(butylene terephthalate) and poly(ethylene terephthalate)), a polyamide, a polycarbonate, a polyphenylene ether, and a polyolefin. The matrix polymer can comprise a poly(butylene terephthalate).

The die extruded composite can comprise an additive, with the proviso that the additive is selected so as to not significantly adversely affect the ability of the die extruded composite to be rotomolded. Additives include impact modifiers, fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, and flame retardants. In general, the additives are used in the amounts generally known to be effective. For example, the total amount of the additives (other than any impact modifier, filler, or reinforcing agents) can be 0.01 to 5 wt%, based on the total weight of the die extruded composite.

The rotomolding can comprise rotomolding the die extruded composite in a rotomolding device. The die extruded composite can be in the form of a powder, a plurality of fibers, a plurality of pellets, a plurality of granules, a plurality of tapes, preferably, at least one of the plurality of powder and the plurality of fibers. The die extruded composite can be in the form of a powder. The powder can be formed, for example, by grinding the die extruded to form a powder having an average particle size of 200 micrometers to 2 mm, or 300 to 900 micrometers, or 400 to 800 micrometers, or 500 to 700 micrometers, as measured by laser light scattering according to ASTM B822. The powder can have an average particle size of 500 to 700 micrometers. The powder can be dried prior to rotomolding at a temperature of greater than or equal to 100°C, or 110 to 300°C or 0.5 to 5 hours, or 2 to 4 hours.

The rotomolding can comprise adding the die extruded composite to the mold, heating the mold, and rotating the mold. The heating can comprise heating to a peak internal mold temperature 200 to 300°C, or 220 to 280°C, or 240 to 260°C. The rotomolding can be performed under a positive pressure, for example, using an inert gas such as nitrogen. The rotomolding can comprise simultaneously heating the mold and rotating the mold to the peak internal mold temperature. After the peak internal mold temperature is obtained, the heating can be reduced to a temperature of and the mold can be rotated at a temperature of 150 to 220°C, or 180 to 200°C and rotated for 0.5 and 2 hours. The rotating can comprise biaxially rotating the mold. After the rotating, the mold can be cooled to a temperature of 20 to 50°C and the article can be removed from the mold. The cooling can occur at a rate of 5 to 200 degrees Celsius per minute (°C/min), or 10 to 100°C/min. If the matrix polymer comprises a thermosetting polymer, then the matrix polymer in the die extruded composite can be present as a prepolymer and the rotomolding can comprise curing the prepolymer.

The article formed by the rotomolding can have a chemical resistance to gasoline (such as gasoline comprising ethanol (such as E10 or E85)) of less than or equal to 2.9 wt%, or less than or equal to 2.7 wt%, or less than or equal to 2.5 wt%, as measured in accordance with ASTM D543.

The article formed by the rotomolding can have a chemical resistance to diesel fuel (such as diesel fuel comprising ethanol (such as e-diesel), biodiesel, or biofuel) of less than or equal to 0.9 wt%, or less than or equal to 0.7 wt%, or less than or equal to 0.5 wt%, as measured in accordance with ASTM D543.

The article formed by the rotomolding can have a gas permeability rate of less than or equal to 100 gram millimeter per millimeters squared per day (g-mm/mm$^2$-day), or less than or equal to 50 g-mm/mm$^2$-day, or less than or equal to 25 g-mm/mm$^2$-day, or 0.1 to 25 g-mm/mm$^2$-day as measured in accordance with ASTM D1434. The article formed by the rotomolding can have a gas permeability rate of less than or equal to or equal to 2 g-mm/mm$^2$-day, or less than 1.5 g-mm/mm$^2$-day, or 0.01 to 1.5 g-mm/mm$^2$-day, as measured in accordance with ASTM D1434.

The article formed by the rotomolding can have a Notched Izod Impact (NII) of 50 to 550 Joules per meter (J/m), or 90 to 300 J/m, or 100 to 160 J/m, as measured at 23°C using 3.18 millimeter (mm) thick bars in accordance with ASTM D256.

The article formed by the rotomolding comprises an interior cavity. A shape of the article can comprise at least one of: a spherical shell, a square shell, a rectangular shell, an oblong shell, a pyramidal shell, a prismatic shell, a cylindrical shell, and a conical shell. A capacity of the interior cavity can be greater than or equal to 1 liter, or 10 to 500 liters, or 15 to 80 liters. The article can be a storage tank. The article can be a fuel tank. The fuel tank can be for a vehicle. The fuel tank can be capable of storing at least one of: diesel fuel, gasoline, hot water (for example, at a temperature of 50 to 95°C), and hydraulic oil. A vehicle can comprise the fuel storage tank or hydraulic oil tank.

The article can be an article of furniture (for example, a chair, a table, a planter, a pet house, a bin, a cooler, and a bed frame), a recreational article (for example, a ball, a boat (for example, a kayak), a slide, and a helmet), a road cone, a sign, a toy (for example, a doll, a doll house, blocks, and stacking rings), and the like.

The following examples are provided to illustrate the present disclosure. The examples are merely illustrative and are not intended to limit devices made in accordance with the disclosure to the materials, conditions, or process parameters set forth therein.

Examples

In the examples, the fiber diameter was determined using acquired SEM images, in a batch processing manner over all images after de-noising and normalization. Firstly, the fiber detection was performed with a fixed threshold on the pre-processed images, which changes the original gray-level images to binary images. To evade the fiber entanglement, regional analysis was conducted instead of separating the individual fiber branches from fiber networks. The inner-boundary distance was calculated for each region covered by the detected fibers. In the images, the distance grows from the edge of the detected region towards the nearest nonzero pixels in the binary image based on Fast Marching Method (FMM) (R. van Uitert and I. Bitter, Medical Physics, 34 (2), 2007), where the distance was initiated as zero at the edge and penetrated with the Euclidean distance growing $\left( D = \sqrt{(x-y)^2} \right)$ towards the next neighbor. Based on the distance map, the centerline of each of the branches was derived, which ware located at local maxima of the distance map. As such, the crossings of fibers were also identified as the connection of different branches. The width of each branch was then calculated along the centerlines over the distance map, avoiding the crossings.

Examples 1-5: Viscosity measurements of die extruded composite

Five composites were prepared as described in Table 1. In the examples, Examples 2 and 4 were prepared via conventional extrusion without a die, whereas the composites of Examples 1, 3, and 5 were extruded through a die as illustrated in FIG. 2.

| Table 1 | | | | | |
|---|---|---|---|---|---|
| Example | 1 | 2 | 3 | 4 | 5 |
| Poly(butylene terephthalate) (wt%) | 100 | 98 | 98 | 95 | 95 |
| Polytetrafluoroethylene (wt%) | - | 2 | 2 | 5 | 5 |
| Die plate | Y | N | Y | N | Y |

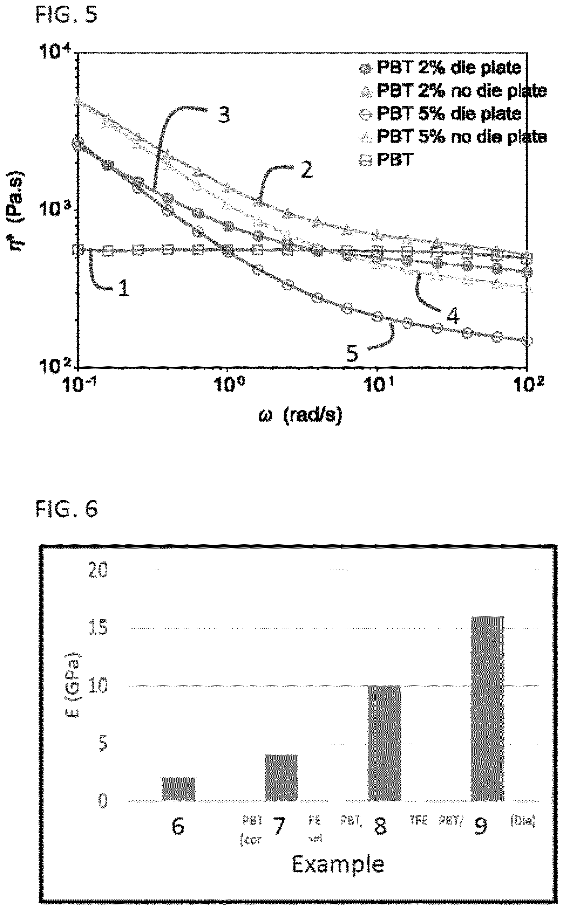

Rheological experiments were performed on the composites of Examples 1-5 and the results are shown in FIG. 5 as the viscosity in Pascal seconds (Pa·s) with increasing frequency in radians per second (rad/s).

FIG. 5 shows that the extent of fibrillation has an effect on the rheological properties, where the graph illustrates that Examples 2 and 4 that were prepared using conventional extrusion (no die-plate) exhibited a higher viscosity compared to Examples 3 and 5, respectively, that made with the die (with enhanced fibrillation). Based on the results illustrated in FIG. 5, it was surprising that the die extruded composites of Examples 3 and 5 could be rotomolded as they displayed high viscosity values of more than 1,000 Pa·s at a shear rate of 0.1 rad/s at 23°C.

Examples 6-9: Linear modulus of extruded composites

Four composites were prepared as described in Table 2. In the examples, Example 7 was prepared via conventional extrusion without a die, whereas the composites of Examples 6, 8, and 9 were extruded through a die as illustrate in FIG. 2.

| Table 2 | | | | |
|---|---|---|---|---|
| Example | 6 | 7 | 8 | 9 |
| Poly(butylene terephthalate) (wt%) | 100 | 97.5 | 97.5 | 95 |
| Polytetrafluoroethylene (wt%) | - | 2.5 | 2.5 | 5 |
| Die plate | Y | N | Y | Y |

The linear modulus, E, in gigapascals (GPa) of the composites of Examples 6-9 was determined in accordance with ISO6721-11 on test strips having a width of 5 mm and a thickness of 1 mm. The results are shown in FIG. 6.

FIG. 6 shows that the extent of fibrillation has an effect on the mechanical properties, where the graph illustrates that Example 8 that comprises 2.5 wt% of the fibrillated polytetrafluoroethylene showed an increase in the linear modulus of more than 100% as compared to Example 7 that was extruded without the die. Example 9 showed a further increase with increasing polytetrafluoroethylene.

Set forth below are various non-limiting aspects of the present disclosure.

Aspect 1: A method for producing an article comprising: rotomolding a die extruded composite comprising a matrix polymer and a fibrillated fluoropolymer in a rotomolding system to obtain the article; wherein the fibrillated fluoropolymer is encapsulated is present in the die extruded composite in an amount of 0.01 to 50 wt%, or 0.01 to 25 wt%, preferably 0.01 to 15 wt% based on the total weight of the die extruded composite; wherein an average fibril diameter of the fibrillated fluoropolymer is 5 to 500 nm, or 10 to 200 nm, or 20 to 100 nm; and wherein the article comprises an interior cavity.

Aspect 2: The method of Aspect 1, wherein die extruded composite comprises a powder; wherein the powder has an average particle size of 200 micrometers to 2 mm, or 300 to 900 micrometers, or 400 to 800 micrometers, or 500 to 700 micrometers, as measured by laser light scattering according to ASTM standard B822.

Aspect 3: The method of any one or more of the preceding aspects, wherein the fibrillated fluoropolymer comprises at least one of: a polytetrafluoroethylene, a polyhexafluoropropylene, a polyvinylidene fluoride, a polychlorotrifluoroethylene, an ethylene tetrafluoroethylene copolymer, a fluorinated ethylene-propylene copolymer, a polyvinyl fluoride, and a poly(ethylene chlorotrifluoroethylene), preferably, the polytetrafluoroethylene.

Aspect 4: The method of any one or more of the preceding aspects, wherein the matrix polymer comprises at least one of: a polyacetal, a poly($C_{1-6}$ alkyl)acrylate, a polyacrylamide, a polyacrylonitrile, a polyamide, a polyamideimide, a polyanhydride, a polyarylene ether, a polyarylene ether ketone, a polyarylene ketone, a polyarylene sulfide, a polyarylene sulfone, a polybenzothiazole, a polybenzoxazole, a polybenzimidazole, a polycarbonate, a polyester, a polyetherimide, a polyimide, a poly($C_{1-6}$ alkyl)methacrylate, a polymethacrylamide, a cyclic olefin polymer, a polyolefin, a polyoxadiazole, a polyoxymethylene, a polyphthalide, a polysilazane, a polystyrene, a polysulfide, a polysulfonamide, a polysulfonate, a polythioester, a polytriazine, a polyurea, a polyurethane, and a vinyl polymer; preferably, at least one of: a polyester, a polyamide, a polycarbonate, a polyarylene ether, and a polyolefin.

Aspect 5: The method of any one or more of the preceding aspects, wherein the matrix polymer comprises a polyester, preferably, poly(butylene terephthalate).

Aspect 6: The method of any one or more of the preceding aspects, wherein a shape of the article comprises at least one of: a spherical shell, a square shell, a rectangular shell, an oblong shell, a pyramidal shell, a prismatic shell, a cylindrical shell, and a conical shell.

Aspect 7: The method of any one or more of the preceding aspects, wherein the article has at least one of: a chemical resistance to gasoline less than or equal to 2.9 wt%, or less than or equal to 2.7 wt%, preferably less than or equal to 2.5 wt%, as measured in accordance with ASTM D543; a chemical resistance to diesel fuel less than or equal to 0.9 wt%, or less than or equal to 0.7 wt%, preferably less than or equal to 0.5 wt%, as measured in accordance with ASTM D543; a gas permeability rate less than or equal to 100 g-mm/mm$^2$-day, or less than or equal to 50 g-mm/mm$^2$-day, preferably less than or equal to 25 g-mm/mm$^2$-day, as measured in accordance with ASTM D1434; a Notched Izod Impact (NII) of 1 to 10 (ft-lb)/inch (53 to 533 J/m), or 2 (ft-lb)/inch to 5 (ft-lb)/inch (107 J/m to 267 J/m), preferably 2 (ft-lb)/inch to 3 (ft-lb)/inch (107 J/m to 160 J/m), as measured at 23°C using 1/8-inch thick bars (3.18 mm) in accordance with ASTM D256.

Aspect 8: The method of any one or more of the preceding aspects, wherein the rotomolding occurs at a peak internal mold temperature of 200 to 300°C, or 220 to 280°C, or 240 to 260°C.

Aspect 9: The method of any one or more of the preceding aspects, further comprising cooling the article after rotomolding at a cooling rate of 5 to 200°C/min.

Aspect 10: The method of any one or more of the preceding aspects, wherein the die extruded composite was extruded in an extruder comprising a die to obtain the die extruded composite prior to rotomolding.

Aspect 11: The method of Aspect 10, wherein the die comprises: an entrance region comprising at least one inlet; the inlet being in fluid communication with an orientation region of the die, the orientation region comprising a plurality of orientation channels having a plurality of inlets and outlets, at least some of the plurality of orientation channels independently having an elongation ratio of 2 and 45, the elongation ratio being defined as the ratio of the cross-sectional area of the channel inlet to the cross-sectional area of the channel outlet; a merging region, the merging region defining a receiving volume in fluid communication with the outlets of the plurality of orientation channels of the orientation region, the merging region being configured to merge together at least some of the fluid flow originating from the plurality of outlets of the orientation channels of the orientation region; and an exit region in fluid communication with the merging region, the exit region comprising at least one outlet.

Aspect 12: The method of Aspect 11, wherein at least a portion of the orientation channels has a hyperbolic curvature over 1 to 95% of the length of the respective orientation channel.

Aspect 13: An article produced by the method of any one more of the preceding aspects.

Aspect 14: The article of Aspect 13, wherein the article comprises a fuel tank or a hydraulic oil tank.

Aspect 15: A vehicle comprising the fuel storage tank or hydraulic oil tank of Aspect 14.

Aspect 16: Use of a die extruded composite comprising a matrix polymer and a fibrillated fluoropolymer in a rotomolding system to obtain the article; wherein the fibrillated fluoropolymer is encapsulated is present in the die extruded composite in an amount of 0.01 to 50 wt%, or 0.01 to 25 wt%, preferably 0.01 to 15 wt% based on the total weight of the die extruded composite; wherein an average fibril diameter of the fibrillated fluoropolymer is 5 to 500 nm, or 10 to 200 nm, or 20 to 100 nm.

The composites, methods, and articles can alternatively comprise, consist of, or consist essentially of, any appropriate materials, steps, or components herein disclosed. The composites, methods, and articles can additionally, or alternatively, be formulated so as to be devoid, or substantially free, of any materials (or species), steps, or components, that are otherwise not necessary to the achievement of the function or objectives of the composites, methods, and articles.

The terms "a" and "an" do not denote a limitation of quantity, but rather denote the presence of at least one of the referenced item. The term "or" means "and/or" unless clearly indicated otherwise by context. Reference throughout the specification to "an embodiment", "another embodiment", "some embodiments", "an aspect", and so forth, means that a particular element (e.g., feature, structure, step, or characteristic) described in connection with the embodiment is included in at least one embodiment described herein, and may or may not be present in other embodiments. In addition, it is to be understood that the described elements may be combined in any suitable manner in the various embodiments.

"Optional" or "optionally" means that the subsequently described event or circumstance may or may not occur, and that the description includes instances where the event occurs and instances where it does not.

Unless specified to the contrary herein, all test standards are the most recent standard in effect as of the filing date of this application, or, if priority is claimed, the filing date of the earliest priority application in which the test standard appears.

The endpoints of all ranges directed to the same component or property are inclusive of the endpoints, are independently combinable, and include all intermediate points and ranges. For example, ranges of "up to 25 wt%, or 5 to 20 wt%" is inclusive of the endpoints and all intermediate values of the ranges of "5 to 25 wt%," such as 10 to 23 wt%, etc.

Unless defined otherwise, technical and scientific terms used herein have the same meaning as is commonly understood by one of skill in the art to which this invention belongs.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

**Claims**

1. A method for producing an article comprising:

rotomolding a die extruded composite comprising a matrix polymer and a fibrillated fluoropolymer in a rotomolding system to obtain the article;

wherein the fibrillated fluoropolymer is encapsulated is present in the die extruded composite in an amount of 0.01 to 50 wt%, or 0.01 to 25 wt%, preferably 0.01 to 15 wt% based on the total weight of the die extruded composite;

wherein an average fibril diameter of the fibrillated fluoropolymer is 5 to 500 nm, or 10 to 200 nm, or 20 to 100 nm; and

wherein the article comprises an interior cavity.

2. The method of Claim 1, wherein die extruded composite comprises a powder; wherein the powder has an average particle size of 200 micrometers to 2 mm, or 300 to 900 micrometers, or 400 to 800 micrometers, or 500 to 700 micrometers, as measured by laser light scattering according to ASTM standard B822.

3. The method of any one or more of the preceding claims, wherein the fibrillated fluoropolymer comprises at least one of: a polytetrafluoroethylene, a polyhexafluoropropylene, a polyvinylidene fluoride, a polychlorotrifluoroethylene, an ethylene tetrafluoroethylene copolymer, a fluorinated ethylene-propylene copolymer, a polyvinyl fluoride, and a poly(ethylene chlorotrifluoroethylene), preferably, the polytetrafluoroethylene.

4. The method of any one or more of the preceding claims, wherein the matrix polymer comprises at least one of: a polyacetal, a poly($C_{1-6}$ alkyl)acrylate, a polyacrylamide, a polyacrylonitrile, a polyamide, a polyamideimide, a polyanhydride, a polyarylene ether, a polyarylene ether ketone, a polyarylene ketone, a polyarylene sulfide, a polyarylene sulfone, a polybenzothiazole, a polybenzoxazole, a polybenzimidazole, a polycarbonate, a polyester, a polyetherimide, a polyimide, a poly($C_{1-6}$ alkyl)methacrylate, a polymethacrylamide, a cyclic olefin polymer, a polyolefin, a polyoxadiazole, a polyoxymethylene, a polyphthalide, a polysilazane, a polystyrene, a polysulfide, a polysulfonamide, a polysulfonate, a polythioester, a polytriazine, a polyurea, a polyurethane, and a vinyl polymer; preferably, at least one of: a polyester, a polyamide, a polycarbonate, a polyarylene ether, and a polyolefin.

5. The method of any one or more of the preceding claims, wherein the matrix polymer comprises a polyester, preferably, poly(butylene terephthalate).

6. The method of any one or more of the preceding claims, wherein a shape of the article comprises at least one of: a spherical shell, a square shell, a rectangular shell, an oblong shell, a pyramidal shell, a prismatic shell, a cylindrical shell, and a conical shell.

7. The method of any one or more of the preceding claims, wherein the article has at least one of:

a chemical resistance to gasoline less than or equal to 2.9 wt%, or less than or equal to 2.7 wt%, preferably less than or equal to 2.5 wt%, as measured in accordance with ASTM D543;

a chemical resistance to diesel fuel less than or equal to 0.9 wt%, or less than or equal to 0.7 wt%, preferably less than or equal to 0.5 wt%, as measured in accordance with ASTM D543;

a gas permeability rate less than or equal to 100 g-mm/mm$^2$-day, or less than or equal to 50 g-mm/mm$^2$-day, preferably less than or equal to 25 g-mm/mm$^2$-day, as measured in accordance with ASTM D1434;

a Notched Izod Impact (NII) of 1 to 10 (ft-lb)/inch (53 to 533 J/m), or 2 (ft-lb)/inch to 5 (ft-lb)/inch (107 J/m to 267 J/m), preferably 2 (ft-lb)/inch to 3 (ft-lb)/inch (107 J/m to 160 J/m), as measured at 23°C using 1/8-inch thick bars (3.18 mm) in accordance with ASTM D256.

8. The method of any one or more of the preceding claims, wherein the rotomolding occurs at a peak internal mold temperature of 200 to 300°C, or 220 to 280°C, or 240 to 260°C.

9. The method of any one or more of the preceding claims, further comprising cooling the article after rotomolding at a cooling rate of 5 to 200°C/min.

10. The method of any one or more of the preceding claims, wherein the die extruded composite was extruded in an extruder comprising a die to obtain the die extruded composite prior to rotomolding.

11. The method of Claim 10, wherein the die comprises:

an entrance region comprising at least one inlet; the inlet being in fluid communication with an orientation region of the die,

the orientation region comprising a plurality of orientation channels having a plurality of inlets and outlets, at least some of the plurality of orientation channels independently having an elongation ratio of 2 and 45, the elongation ratio being defined as the ratio of the cross-sectional area of the channel inlet to the cross-sectional area of the channel outlet;

a merging region, the merging region defining a receiving volume in fluid communication with the outlets of the plurality of orientation channels of the orientation region, the merging region being configured to merge together at least some of the fluid flow originating from the plurality of outlets of the orientation channels of the orientation region; and

an exit region in fluid communication with the merging region, the exit region comprising at least one outlet.

12. The method of Claim 11, wherein at least a portion of the orientation channels has a hyperbolic curvature over 1 to 95% of the length of the respective orientation channel.

13. An article produced by the method of any one more of the preceding claims.

14. The article of Claim 13, wherein the article comprises a fuel tank or a hydraulic oil tank.

15. A vehicle comprising the fuel storage tank or hydraulic oil tank of Claim 14.

FIG. 1

FIG. 2

101

103

105

107

200

201

205

207

209

FIG. 3

402

FIG. 4

FIG. 5

FIG. 6

Europäisches
Patentamt

European
Patent Office

Office européen
des brevets

# EUROPEAN SEARCH REPORT

Application Number

EP 18 16 2038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2012/095821 A1 (SABIC INNOVATIVE PLASTICS IP [NL]; VAN DER MEE MARK [NL]; GISBERGEN JO) 19 July 2012 (2012-07-19) * claims 1-7, 21 * ----- | 1-13 | INV. B29C41/04 C08L67/02 |
| Y | WO 2016/154567 A1 (SABIC GLOBAL TECHNOLOGIES BV [NL]; GAGGAR SATISH KUMAR [US]) 29 September 2016 (2016-09-29) * paragraph [0126] * * paragraph [0034] * * claims 1-20 * ----- | 1-13 | |
| Y A | US 2009/181199 A1 (AGARWAL PARMINDER [US] ET AL) 16 July 2009 (2009-07-16) * claims 20-26 * * paragraph [0074] * * paragraphs [0003] - [0005] * ----- | 1-13 14,15 | |
| A | WO 96/30180 A1 (EXXON CHEMICAL PATENTS INC [US]) 3 October 1996 (1996-10-03) * the whole document * ----- | 1-15 | |
| | | | TECHNICAL FIELDS SEARCHED (IPC) |
| | | | B29C C08L |

The present search report has been drawn up for all claims

| Place of search | Date of completion of the search | Examiner |
|---|---|---|
| The Hague | 18 May 2018 | Mensah, Laure |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 18 16 2038

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2018

| Patent document cited in search report | | | Publication date | Patent family member(s) | | | Publication date |
|---|---|---|---|---|---|---|---|
| WO 2012095821 | A1 | | 19-07-2012 | CN | 103732665 | A | 16-04-2014 |
| | | | | EP | 2663592 | A1 | 20-11-2013 |
| | | | | KR | 20140034736 | A | 20-03-2014 |
| | | | | US | 2012184661 | A1 | 19-07-2012 |
| | | | | WO | 2012095821 | A1 | 19-07-2012 |
| WO 2016154567 | A1 | | 29-09-2016 | CN | 107531983 | A | 02-01-2018 |
| | | | | EP | 3274392 | A1 | 31-01-2018 |
| | | | | US | 2018118899 | A1 | 03-05-2018 |
| | | | | WO | 2016154567 | A1 | 29-09-2016 |
| US 2009181199 | A1 | | 16-07-2009 | CN | 101952367 | A | 19-01-2011 |
| | | | | EP | 2235106 | A1 | 06-10-2010 |
| | | | | US | 2009181199 | A1 | 16-07-2009 |
| | | | | WO | 2009091819 | A1 | 23-07-2009 |
| WO 9630180 | A1 | | 03-10-1996 | CA | 2215253 | A1 | 03-10-1996 |
| | | | | EP | 0817711 | A1 | 14-01-1998 |
| | | | | WO | 9630180 | A1 | 03-10-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R.J. CRAWFORD ; J.L. THORNE.** Rotational Molding Technology. William Andre Publishing, 2002, 28